# FASCICULE DE BREVET EUROPEEN

(11) **EP 1 824 731 B1**
(45) Date de publication et mention de la délivrance du brevet: **11.02.2009**
(21) Numéro de dépôt: 05824539.0
(22) Date de dépôt: 05.12.2005
(51) Int. Cl.: B64C 9/00

(54) **PROCEDE POUR AMELIORER LE PILOTAGE EN ROULIS D'UN AERONEF ET AERONEF METTENT EN OEUVRE CE PROCEDE**
VERFAHREN ZUR VERBESSERUNG DES ROLLSTEUERNS EINES FLUGZEUGS UND DIESES VERWENDENDE FLUGZEUG
METHOD FOR IMPROVING ROLL STEERING OF AN AIRCRAFT AND AIRCRAFT USING SAME

(30) Priorité: 16.12.2004 FR 0413400
(43) Date de publication de la demande: 29.08.2007
(73) Titulaire: AIRBUS France, 31060 Toulouse (FR)
(72) Inventeur: SAUVINET, Frédéric, F-31170 Tournefeuille (FR)
(74) Mandataire: Bonnetat, Christian
(86) Numéro de dépôt international: PCT/FR2005/003026
(87) Numéro de publication internationale: WO 2006/064102

(56) Documents cités:
- EP-A- 0 256 374
- FR-A- 2 770 824
- FR-A- 2 850 084
- US-A- 4 455 004

## Description

La présente invention concerne un procédé pour améliorer le pilotage en roulis d'un aéronef, ainsi qu'un aéronef mettant en oeuvre ce procédé.

On sait que les ailes d'un aéronef sont pourvues de surfaces aérodynamiques commandables -principalement des ailerons et accessoirement des volets déporteurs- permettant de piloter ledit aéronef en roulis autour de son axe longitudinal. On sait également que, notamment pour les aéronefs de grandes dimensions, lesdites ailes sont souples et déformables de sorte que, dans certaines situations de vol (vitesse élevée, nombre de Mach élevé, pression dynamique élevée), le braquage desdites surfaces aérodynamiques de commande en roulis a pour conséquence de vriller lesdites ailes, ce qui entraîne une prise d'incidence locale de ces dernières s'opposant aux effets aérodynamiques en roulis desdites surfaces aérodynamiques et diminuant fortement l'efficacité de celles-ci. La réponse en roulis de l'aéronef ne correspond donc alors pas au roulis commandé par lesdites surfaces aérodynamiques.

US-A-4 455 004, qui décrit un aéronef tel que mentionné dans les préambules des revendications 1 et 9, est considéré comme le document de l'art antérieur le plus proche.

La présente invention a pour objet de remédier à cet inconvénient.

A cette fin, selon l'invention, le procédé pour améliorer le pilotage en roulis d'un aéronef comportant :
- un fuselage,
- deux ailes, symétriques par rapport audit fuselage, pourvues de surfaces aérodynamiques commandables aptes à engendrer un mouvement de roulis pour l'aéronef, et
- une dérive verticale, faisant saillie par rapport à la partie arrière dudit fuselage et pourvue d'une gouverne de direction s'étendant le long du bord arrière de ladite dérive et apte à tourner, par rapport à celle-ci, autour d'un axe de rotation,
   ladite gouverne de direction étant partagée, transversalement audit axe de rotation, en au moins deux éléments de gouverne disposés successivement le long dudit axe de rotation et pouvant être commandés indépendamment en rotation autour de celui-ci ;
   est remarquable en ce que
- lorsqu'on braque lesdites surfaces aérodynamiques d'ailes pour communiquer un mouvement de roulis audit aéronef dans un sens déterminé :
   ■ on braque, dans ledit sens déterminé de roulis, au moins un desdits éléments de gouverne disposés du côté de l'extrémité de ladite dérive verticale opposée audit fuselage, et
   ■ simultanément, on braque en sens opposé au moins un desdits éléments de gouverne disposés du côté de l'extrémité de ladite dérive verticale voisine dudit fuselage.

Ainsi, lesdits éléments de gouverne engendrent des forces de portance antagonistes, transversales audit aéronef, qui exercent sur celui-ci des moments en roulis, également antagonistes, par rapport à l'axe longitudinal dudit aéronef. Cependant, du fait que les éléments de gouverne qui exercent un moment en roulis de même sens que le mouvement dû auxdites surfaces aérodynamiques des ailes sont plus éloignés dudit axe que lesdits éléments de gouverne qui exercent un moment de roulis de sens opposé, il en résulte que le moment résultant exercé en roulis par lesdits éléments de gouverne renforce le mouvement de roulis engendré par lesdites surfaces aérodynamiques des ailes.

De préférence, on choisit le nombre, la surface, la disposition, etc ... desdits éléments de gouverne de façon que les effets antagonistes en lacet, engendrés par lesdits éléments de gouverne braqués dans des sens opposés, s'équilibrent au moins approximativement, l'effet résultant en lacet étant pratiquement nul.

Dans un mode de mise en oeuvre avantageux de la présente invention, ladite gouverne de direction ne comporte que deux éléments de gouverne, à savoir un élément de gouverne inférieur et un élément de gouverne supérieur et, pendant un mouvement de roulis engendré par lesdites surfaces aérodynamiques des ailes, on braque, simultanément, ledit élément de gouverne supérieur dans le sens du mouvement de roulis et ledit élément de gouverne inférieur dans le sens opposé. Dans ce cas, les surfaces desdits éléments de gouverne inférieur et supérieur sont au moins approximativement égales et lesdits éléments de gouverne inférieur et supérieur sont braqués de façon symétrique autour dudit axe de rotation de la gouverne. Ainsi, il n'en résulte aucun effet en lacet.

Quel que soit le nombre desdits éléments de gouverne, il est préférable que l'appoint de commande en roulis apporté par lesdits éléments de gouverne n'ait lieu que lorsque l'aéronef se trouve dans une situation de vol dans laquelle lesdites surfaces aérodynamiques des ailes présentent une perte d'efficacité en roulis. Généralement, dans une telle situation, la vitesse, le nombre de Mach ou la pression dynamique de l'aéronef sont très élevées. Aussi, on peut, pour déterminer une telle situation, mesurer au moins l'une des trois grandeurs ci-dessus à titre de paramètre et comparer la mesure dudit paramètre à un seuil, par exemple déterminé expérimentalement, au-delà duquel ladite situation se produit. Ainsi, tant que la mesure du paramètre est inférieure audit seuil, l'efficacité en roulis des surfaces aérodynamiques des ailes est satisfaisante et il n'est pas nécessaire de faire intervenir les éléments de gouverne de direction. En revanche, lorsque la mesure du paramètre est supérieure audit seuil, l'efficacité en roulis des surfaces aérodynamiques des ailes n'est plus satisfaisante et le procédé selon l'invention est mis en oeuvre.

La présente invention concerne de plus un aéronef mettant en oeuvre le procédé de l'invention décrit ci-dessus. Un tel aéronef, comportant :
- un fuselage ;
- deux ailes, symétriques par rapport audit fuselage, pourvues de surfaces aérodynamiques commandables aptes à engendrer un mouvement de roulis pour l'aéronef ;
- des moyens de pilotage en roulis dudit aéronef aptes à commander lesdites surfaces aérodynamiques commandables ;
- une dérive verticale, faisant saillie par rapport à la partie arrière dudit fuselage et pourvue d'une gouverne de direction s'étendant le long du bord arrière de ladite dérive et apte à tourner, par rapport à celle-ci, autour d'un axe de rotation ; et
- des moyens de pilotage en lacet dudit aéronef aptes à commander ladite gouverne de direction,
- ladite gouverne de direction étant constituée d'au moins deux éléments de gouverne disposés successivement le long dudit axe de rotation ;
   est remarquable en ce que
- lesdits moyens de pilotage en lacet sont aptes à engendrer des premiers ordres de braquage individuels pour chacun desdits éléments de gouverne ;
- lesdits moyens de pilotage en roulis sont aptes à engendrer, en plus d'ordres de braquage pour lesdites surfaces aérodynamiques, des seconds ordres de braquage individuels pour lesdits éléments de gouverne, lesdits seconds ordres de braquage étant tels que l'action résultante en lacet est au moins approximativement nulle ; et
- des moyens d'addition sont prévus pour additionner, pour chacun desdits éléments de gouverne, le second ordre de braquage individuel au premier ordre de braquage individuel correspondant, lorsque la mesure d'un paramètre représentatif d'une situation de vol particulière dépasse un seuil préétabli.

Dans une forme de réalisation préférée, ladite gouverne de direction est constituée d'un élément de gouverne inférieur et d'un élément de gouverne supérieur.

Les figures du dessin annexé feront bien comprendre comment l'invention peut être réalisée. Sur ces figures, des références identiques désignent des éléments semblables.

La figure 1 est une vue en perspective, du dessus et de l'arrière, d'un avion civil gros porteur dont la gouverne de direction est, selon un exemple de mise en oeuvre de la présente invention, partagée en un élément de gouverne supérieur et en un élément de gouverne inférieur.

La figure 2 est une vue schématique de l'avant de l'avion de la figure 1, illustrant la situation dans laquelle le roulis est commandé par les seuls ailerons dudit avion.

La figure 3 est une vue schématique de l'avant de l'avion de la figure 1, comparable à la figure 2, illustrant la mise en oeuvre du procédé conforme à la présente invention.

La figure 4 est une vue de dessus schématique de la partie arrière dudit avion, avec les éléments de gouverne de direction dans la configuration de la figure 3.

La figure 5 montre le schéma synoptique d'un dispositif de commande en roulis et en lacet pour la mise en oeuvre du procédé de l'invention.

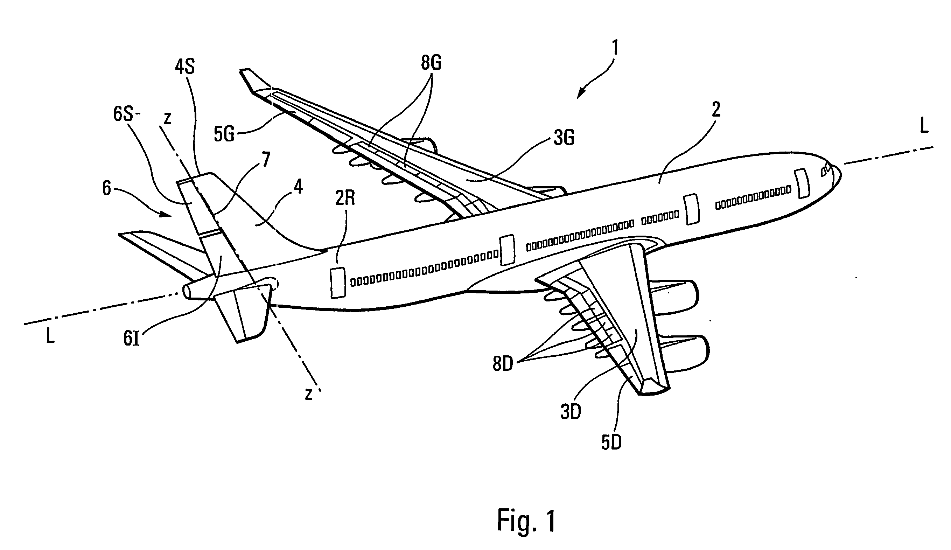

L'avion civil gros porteur 1, montré sur la figure 1, comporte, de façon connue, un fuselage 2 présentant un axe longitudinal L-L et pourvu de deux ailes 3G et 3D, symétriques par rapport audit fuselage 2, ainsi que d'une dérive verticale 4, faisant saillie vers le haut par rapport à la partie arrière 2R du fuselage 2. De plus, également de façon connue, d'une part, lesdites ailes 3G et 3D sont chacune pourvues d'au moins un aileron 5G ou 5D, lesdits ailerons 5G et 5D étant symétriques par rapport au fuselage 2 et étant aptes à engendrer un mouvement de roulis pour l'aéronef et, d'autre part, la dérive verticale 4 est pourvue d'une gouverne de direction 6 s'étendant le long du bord arrière 7 de ladite dérive 4 et étant apte à tourner, par rapport à cette dernière, autour d'un axe de rotation z-z.

De plus, lesdites ailes 3D et 3G sont respectivement pourvues de volets déporteurs 8D et 8G, deux à deux symétriques par rapport au fuselage 2, lesdits volets déporteurs 8D et 8G pouvant être utilisés, de façon connue, pour la commande en roulis de l'avion 1, pour renforcer l'action des ailerons 5D et 5G.

Selon une première particularité de l'exemple de mise en oeuvre de la présente invention, représenté sur la figure 1, ladite gouverne de direction 6 est partagée, transversalement audit axe de rotation z-z, en deux éléments de gouverne 6S et 6I, de surface aérodynamiquement équivalente, disposés l'un à la suite de l'autre, de sorte que l'un, 61, est proche de la partie arrière 2R du fuselage 2 et occupe une position inférieure, alors que l'autre, 6S, est proche de l'extrémité supérieure 4S de la dérive verticale 4, opposée à ladite partie arrière 2R, et occupe donc une position supérieure.

Les éléments de gouverne supérieur 6S et inférieur 6I peuvent être commandés conjointement en rotation de façon que la gouverne de direction 6 se comporte comme si elle était monolithique. Les éléments de gouverne 6S et 6I peuvent également être commandés individuellement et, le cas échéant, dans des sens opposés.

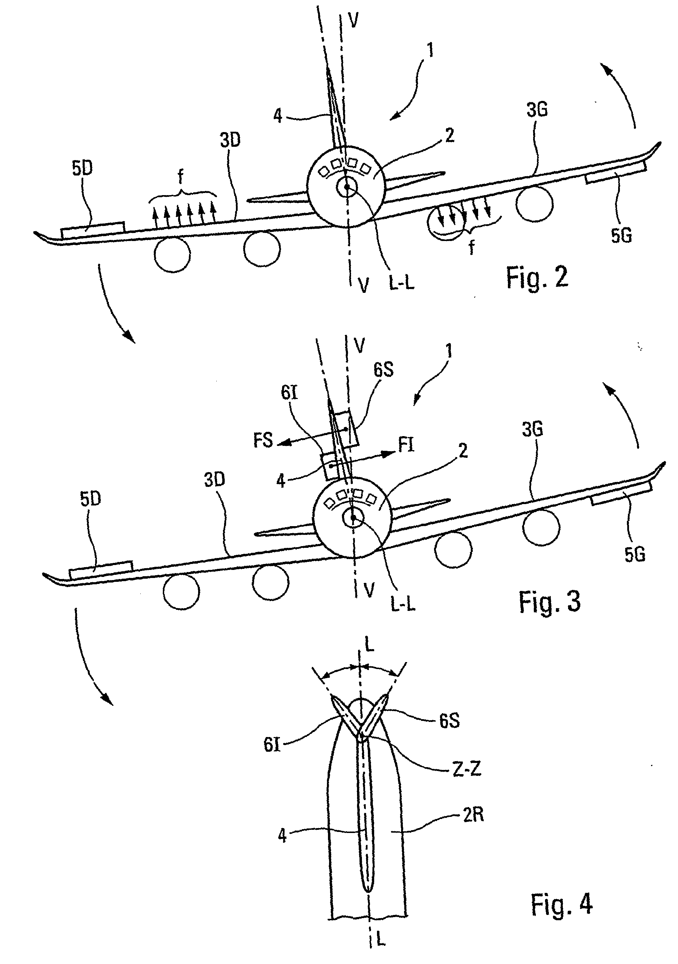

Lorsque, comme cela est illustré sur la figure 2, un mouvement de roulis est commandé de façon usuelle à l'aide desdits ailerons 5G et 5D (dont l'action est éventuellement renforcée par les volets déporteurs 8G, 8D, non représentés sur la figure 2), il peut se faire que dans certaines situations de vol où la vitesse est élevée, le braquage des ailerons 5G, 5D -et éventuellement des volets déporteurs 8G, 8D- ait pour conséquence le vrillage des ailes 3G, 3D par rapport à leur point d'ancrage dans le fuselage 2. Il en résulte des prises d'incidence locale sur lesdites ailes, symbolisées par les flèches f sur la figure 2, s'opposant aux effets aérodynamiques des ailerons 5G, 5D et, éventuellement, des volets déporteurs 8G, 8D et diminuant fortement l'efficacité en roulis desdits ailerons 5G, 5D et volets déporteurs 8G, 8D. L'avion 1 n'a donc plus une réponse en roulis adaptée à la demande du pilote.

Pour remédier à cet inconvénient, selon l'invention, en même temps que l'on braque les ailerons 5G, 5D (et éventuellement les volets déporteurs 8G, 8D) pour obtenir un mouvement de roulis de l'avion 1 autour de l'axe longitudinal L-L, on braque les éléments de gouverne 6S et 6I de façon symétrique par rapport à la dérive 4 de l'avion (voir les figures 3 et 4), l'élément de gouverne supérieur 6S étant braqué dans le sens du roulis commandé, alors que l'élément de gouverne inférieur 6I est braqué dans le sens opposé.

Dans ces conditions, les éléments de gouverne supérieur et inférieur engendrent respectivement des forces de portance latérales FS et FI, de modules égaux, mais de sens opposés. Ces forces FS et FI engendrent à leur tour, respectivement, et par rapport à l'axe longitudinal L-L de l'avion 1, un moment dans le sens du mouvement de roulis commandé et un moment antagoniste audit mouvement de roulis. Puisque le bras de levier de la force FS est plus grand que celui de la force FI, le moment dans le sens du roulis est supérieur au moment dans le sens antagoniste et le moment résultant de ces deux moments agit donc dans le sens du mouvement de roulis commandé.

Ainsi, les éléments de gouverne 6S et 6I assistent les ailerons 5G, 5D (et éventuellement les volets déporteurs 8G, 8D) dans la réalisation dudit mouvement de roulis commandé.

Par ailleurs, on remarquera que, puisque les éléments de gouverne 6S et 6I présentent des surfaces quasiment identiques et sont braqués symétriquement par rapport à la dérive 4, leurs braquages n'entraînent aucun effet en lacet.

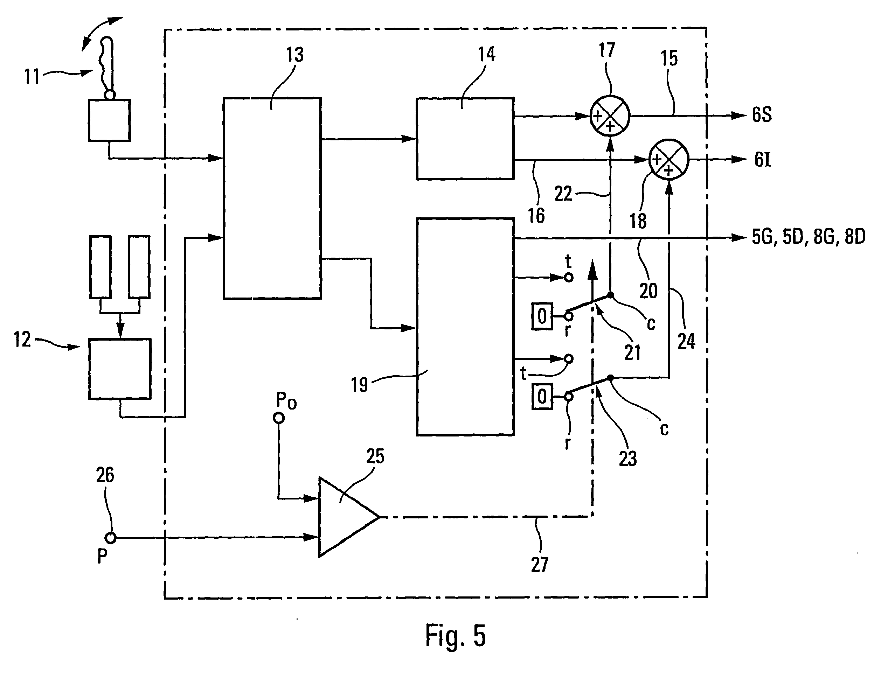

Le dispositif pour la mise en oeuvre du procédé décrit ci-dessus, représenté schématiquement sur la figure 5, comporte :
- un système de manche 11, apte à engendrer, entre autres, des ordres de commande en roulis pour les ailerons 5G, 5D et, éventuellement, pour les volets déporteurs 8G, 8D ;
- un système de palonnier 12, apte à engendrer des ordres de commande pour les éléments de gouverne de direction 6S et 6I ;
- un calculateur 13 recevant lesdits ordres de commande provenant du système de manche 11 et du système de palonnier 12 et délivrant, à ses sorties et en fonction des lois de commandes de vol électriques qu'il possède en mémoire, respectivement un ordre de moment commandé en lacet et un ordre de moment commandé en roulis ;
- un calculateur 14 recevant dudit calculateur 13 l'ordre de moment commandé en lacet et élaborant des ordres de commande respectifs pour les éléments de gouverne de direction 6S et 6I, ordres qui sont adressés aux actionneurs de ces derniers, respectivement par des lignes 15 et 16 ;
- un additionneur 17 intercalé sur la ligne 15 de commande de l'élément de gouverne de direction supérieur 6S ;
- un additionneur 18 intercalé sur la ligne 16 de commande de l'élément de gouverne de direction inférieur 6I ;
- un calculateur 19 recevant dudit calculateur 13 l'ordre de moment commandé en roulis et élaborant des ordres de commande en roulis respectifs :
   ■ pour les ailerons 5G, 5D et éventuellement pour les volets déporteurs 8G, 8D, lesdits ordres correspondants étant adressés aux actionneurs de ceux-ci par une ligne 20,
   ■ pour l'élément de gouverne supérieur 6S, lesdits ordres correspondants étant disponibles sur le contact de travail t d'un commutateur 21, dont le contact de repos r est relié à un potentiel nul et dont le contact commun c est relié à l'additionneur 17 par une ligne 22, et
   ■ pour l'élément de gouverne inférieur 6I, lesdits ordres correspondants étant disponibles sur le contact de travail t d'un commutateur 23, dont le contact de repos r est relié à un potentiel nul et dont le contact commun c est relié à l'additionneur 18 par une ligne 24 ; et
- un comparateur 25 recevant, d'une borne 26, la mesure d'un paramètre P, tel que la vitesse de l'avion, le nombre de Mach, la pression dynamique, etc ... et comparant cette mesure à un seuil Po préétabli représentatif d'une situation de vol au-delà de laquelle la commande en roulis par les ailerons 5G, 5D aidés éventuellement par les volets déporteurs 8G, 8D, n'est plus satisfaisante, ledit comparateur 25 étant apte à commander lesdits commutateurs 21 et 23 par une ligne d'action 27.

Ainsi, lorsque l'avion 1 n'est pas dans une situation de vol pour laquelle l'action en roulis des ailerons 5G, 5D (et éventuellement celle des volets déporteurs 8G, 8D) est amoindrie, les éléments de gouverne de direction 6S et 6I sont commandés par le système de palonnier 12, à travers les calculateurs 13 et 14 et les lignes 15 et 16.

En revanche, lorsqu'une telle situation apparaît, elle est détectée par la mesure du paramètre P qui devient supérieur au seuil Po et le comparateur 25 fait basculer les commutateurs 21 et 23, de leurs positions de repos r à leurs positions de travail t, de sorte que les ordres de roulis élaborés par le calculateur 19 respectivement pour l'élément de gouverne supérieur 6S et pour l'élément de gouverne inférieur 6I sont transmis aux additionneurs 17 et 18, respectivement par les lignes 22 et 24. Dans ce cas, les ordres adressés aux éléments de gouverne 6S et 6I comportent, pour une part, des ordres en lacet commandés par le système de palonnier 12 et, pour une part, des ordres d'aide en roulis provenant du calculateur 14.

## Revendications

1. Procédé pour améliorer le pilotage en roulis d'un aéronef comportant :
- un fuselage (2),
- deux ailes (3G, 3D), symétriques par rapport audit fuselage, pourvues de surfaces aérodynamiques commandables (5G, 5D, 8G, 8D) aptes à engendrer un mouvement de roulis pour l'aéronef, et
- une dérive verticale (4), faisant saillie par rapport à la partie arrière (2R) dudit fuselage et pourvue d'une gouverne de direction (6) s'étendant le long du bord arrière (7) de ladite dérive (4) et apte à tourner, par rapport à celle-ci, autour d'un axe de rotation (z-z),
ladite gouverne de direction (6) étant partagée, transversalement audit axe de rotation, en au moins deux éléments de gouverne (6I, 6S) disposés successivement le long dudit axe de rotation (z-z) et pouvant être commandés indépendamment en rotation autour de celui-ci ;
**caractérisé en ce que** :
- lorsqu'on braque lesdites surfaces aérodynamiques d'ailes (5G, 5D, 8G, 8D) pour communiquer un mouvement de roulis audit aéronef dans un sens déterminé :
■ on braque, dans ledit sens déterminé de roulis, au moins un desdits éléments de gouverne (6S) disposés du côté de l'extrémité (4S) de ladite dérive verticale (4) opposée audit fuselage (2), et
■ simultanément, on braque en sens opposé au moins un desdits éléments de gouverne (6I) disposés du côté de l'extrémité de ladite dérive verticale (4) voisine dudit fuselage (2).

2. Procédé selon la revendication 1,
**caractérisé en ce que** les effets antagonistes en lacet engendrés par les éléments de gouverne (6S, 6I) braqués dans des sens opposés s'équilibrent au moins approximativement.

3. Procédé selon l'une des revendications 1 ou 2,
**caractérisé en ce que** :
- on partage ladite gouverne de direction (6) en un élément de gouverne inférieur (6I) et en un élément de gouverne supérieur (6S) ; et
- pendant un mouvement de roulis engendré par lesdites surfaces aérodynamiques des ailes, on braque simultanément ledit élément de gouverne supérieur (6S) dans le sens dudit mouvement de roulis et ledit élément de gouverne inférieur (6I) dans le sens opposé.

4. Procédé selon les revendications 2 et 3,
**caractérisé en ce que** les surfaces desdits éléments de gouverne inférieur (6I) et supérieur (6S) sont au moins approximativement égales et **en ce que** lesdits éléments de gouverne inférieur et supérieur sont braqués de façon symétrique autour dudit axe de rotation (z-z) de ladite gouverne.

5. Procédé selon l'une quelconque des revendications 1 à 4,
**caractérisé en ce que** le braquage desdits éléments de gouverne (6I, 6S) est soumis au dépassement d'un seuil (Po) par un paramètre (P) représentatif d'une situation de vol particulière dudit aéronef.

6. Procédé selon la revendication 5,
**caractérisé en ce que** ledit paramètre (P) est la vitesse de l'aéronef.

7. Procédé selon la revendication 5,
**caractérisé en ce que** ledit paramètre (P) est le nombre de Mach.

8. Procédé selon la revendication 5,
**caractérisé en ce que** ledit paramètre (P) est la pression dynamique.

9. Aéronef à commande en roulis améliorée mettant en oeuvre le procédé spécifié sous l'une quelconque des revendications 2 à 8, comportant :
- un fuselage (2) ;
- deux ailes (3G, 3D), symétriques par rapport audit fuselage (2), pourvues de surfaces aérodynamiques commandables (5G, 5D, 8G, 8D) aptes à engendrer un mouvement de roulis pour l'aéronef ;
- des moyens (11, 13, 19) de pilotage en roulis dudit aéronef aptes à commander lesdites surfaces aérodynamiques commandables ;
- une dérive verticale (4), faisant saillie par rapport à la partie arrière (2R) dudit fuselage (2) et pourvue d'une gouverne de direction (6) s'étendant le long du bord arrière (7) de ladite dérive (4) et apte à tourner, par rapport à celle-ci, autour d'un axe de rotation (z-z) ; et
- des moyens (12, 13, 14) de pilotage en lacet dudit aéronef aptes à commander ladite gouverne de direction (6),
- ladite gouverne de direction (6) est constituée d'au moins deux éléments de gouverne (6I, 6S) disposés successivement le long dudit axe de rotation (z-z) ;
**caractérisé en ce que**
- lesdits moyens de pilotage en lacet (12, 13, 14) sont aptes à engendrer des premiers ordres de braquage individuels pour chacun desdits éléments de gouverne (6I, 6S) ;
- lesdits moyens de pilotage en roulis (11, 13, 19) sont aptes à engendrer, en plus d'ordres de braquage pour lesdites surfaces aérodynamiques (5G, 5D, 8G, 8D), des seconds ordres de braquage individuels pour lesdits éléments de gouverne (6I, 6S), lesdits seconds ordres de braquage étant tels que l'action résultante en lacet est au moins approximativement nulle ; et
- des moyens d'addition (17, 18) sont prévus pour additionner, pour chacun desdits éléments de gouverne (6I, 6S), le second ordre de braquage individuel au premier ordre de braquage individuel correspondant lorsque la mesure d'un paramètre (P) représentatif d'une situation de vol particulière dépasse un seuil préétabli (Po).

10. Aéronef selon la revendication 9,
**caractérisé en ce que** ladite gouverne de direction (6) est constituée d'un élément de gouverne inférieur (6I) et d'un élément de gouverne supérieur (6S).

## Claims

1. A method for improving the roll steering of an aircraft comprising:
- a fuselage (2),
- two wings (3G, 3D), symmetric with respect to said fuselage, provided with controllable aerodynamic surfaces (5G, 5D, 8G, 8D) able to produce a roll movement for the aircraft, and
- a vertical fin (4) projecting with respect to the rear part (2R) of said fuselage and provided with a rudder (6) extending along the rear edge (7) of said fin (4) and able to turn, with respect to the latter, about an axis of rotation (z-z), said rudder (6) being divided, transversely to said axis of rotation, into at least two rudder elements (6I, 6S) disposed successively along said axis of rotation (z-z) and being independently controllable in rotation about the latter,
**characterized in that**, when said wing aerodynamic surfaces (5G, 5D, 8G, 8D) are deflected so as to communicate a roll movement to said aircraft in a determined direction:
• at least one of said rudder elements (6S) disposed on the side of the end (4S) of said vertical fin (4) opposite to said fuselage (2) is deflected in said determined direction of roll, and
• simultaneously, at least one of said rudder elements (6I) disposed on the side of the end of said vertical fin (4) neighboring said fuselage (2) is deflected in the opposite direction.

2. The method as claimed in claim 1,
**characterized in that** the antagonistic yaw effects produced by the rudder elements (6S, 6I) deflected in opposite directions balance one another at least approximately.

3. The method as claimed in either of claims 1 or 2,
**characterized in that**:
- said rudder (6) is divided into a lower rudder element (6I) and into an upper rudder element (6S); and
- during a roll movement produced by said aerodynamic surfaces of the wings, said upper rudder element (6S) is deflected in the direction of said roll movement and said lower rudder element (6I) is deflected in the opposite direction simultaneously.

4. The method as claimed in claims 2 and 3,
**characterized in that** the surface areas of said lower (6I) and upper (6S) rudder elements are at least approximately equal and **in that** said lower and upper rudder elements are deflected symmetrically about said axis of rotation (z-z) of said rudder.

5. The method as claimed in any one of claims 1 to 4,
**characterized in that** the deflection of said rudder elements (6I, 6S) is subject to the exceeding of a threshold (Po) by a parameter (P) representative of a particular flight situation of said aircraft.

6. The method as claimed in claim 5,
**characterized in that** said parameter (P) is the speed of the aircraft.

7. The method as claimed in claim 5,
**characterized in that** said parameter (P) is the Mach number.

8. The method as claimed in claim 5,
**characterized in that** said parameter (P) is the dynamic pressure.

9. An aircraft with improved roll control implementing the method specified under any one of claims 2 to 8, comprising:
- a fuselage (2);
- two wings (3G, 3D), symmetric with respect to said fuselage (2), provided with controllable aerodynamic surfaces (5G, 5D, 8G, 8D) able to produce a roll movement for the aircraft;
- means (11, 13, 19) of roll steering of said aircraft able to control said controllable aerodynamic surfaces;
- a vertical fin (4) projecting with respect to the rear part (2R) of said fuselage and provided with a rudder (6) extending along the rear edge (7) of said fin (4) and able to turn, with respect to the latter, about an axis of rotation (z-z); and
- means (12, 13, 14) of yaw steering of said aircraft able to control said rudder (6);
- said rudder (6) consisting of at least two rudder elements (6I, 6S) disposed successively along said axis of rotation (z-z);
**characterized in that**:
- said means of yaw steering (12, 13, 14) are able to produce first individual deflection orders for each of said rudder elements (6I, 6S);
- said means of roll steering (11, 13, 19) are able to produce, in addition to deflection orders for said aerodynamic surfaces (5G, 5D, 8G, 8D), second individual deflection orders for said rudder elements (6I, 6S), said second deflection orders being such that the resultant yaw action is at least approximately zero; and
- means of addition (17, 18) are provided for adding, for each of said rudder elements (6I, 6S), the second individual deflection order to the corresponding first individual deflection order when the measurement of a parameter (P) representative of a particular flight situation exceeds a preset threshold (Po).

10. The aircraft as claimed in claim 9,
**characterized in that** said rudder (6) consists of a lower rudder element (6I) and of an upper rudder element (6S).

## Patentansprüche

1. Verfahren zur Verbesserung des Rollsteuerns eines Flugzeugs mit:
- einem Rumpf (2),
- zwei bezüglich des Rumpfes symmetrisch angeordneten Flügeln (3G, 3D), die mit ansteuerbaren aerodynamischen Flächen (5G, 5D, 8G, 8D), die geeignet sind, an dem Flugzeug eine Rollbewegung zu erzeugen, ausgestattet sind,
- einem vertikalen Seitenleitwerk (4), das von dem hinteren Teil (2R) des Rumpfes abragt und mit einem Seitenruder (6) ausgestattet ist, das sich entlang der Hinterkante (7) des Seitenleitwerks (4) erstreckt und gegenüber diesem um eine Drehachse (z-z) drehbar ist, wobei das Seitenruder (6) quer zur Drehachse in mindestens zwei Steuerflächenelemente (61, 6S) geteilt ist, die entlang der Drehachse (z-z) hintereinander angeordnet und unabhängig um diese drehsteuerbar sind,
**dadurch gekennzeichnet, dass**:
- wenn die aerodynamischen Flächen der Flügel (5G, 5D, 8G, 8D) ausgeschlagen werden, um das Flugzeug in eine bestimmte Richtung in eine Rollbewegung zu versetzen:
• mindestens eine der Steuerflächenelemente (6S), die auf der Seite des Endes (4S) des Seitenleitwerks (4), das dem Rumpf (2) gegenüberliegt, angeordnet ist, in die bestimmte Richtung der Rollbewegung ausgeschlagen wird und
• gleichzeitig mindestens eine der Steuerflächenelemente (61), die auf der Seite des Endes des vertikalen Seitenleitwerks (4), das dem Rumpf (2) benachbart angeordnet ist, in die entgegengesetzte Richtung ausgeschlagen wird.

2. Verfahren nach Anspruch 1,
**dadurch gekennzeichnet, dass** die von den in entgegengesetzte Richtungen ausgeschlagenen Steuerflächenelementen (6S, 61) erzeugten antagonistischen Gierwirkungen sich zumindest annähernd ausgleichen.

3. Verfahren nach Anspruch 1 oder 2,
**dadurch gekennzeichnet, dass**:
- das Seitenruder (6) in ein unteres Steuerflächenelement (61) und ein oberes Steuerflächenelement (6S) geteilt wird und
- während einer von den aerodynamischen Flächen der Flügel erzeugten Rollbewegung gleichzeitig das obere Steuerflächenelement (6S) in Richtung der Rollbewegung und das untere Steuerflächenelement (61) in die entgegengesetzte Richtung ausgeschlagen wird.

4. Verfahren nach den Ansprüchen 2 und 3,
**dadurch gekennzeichnet, dass** die Flächen des unteren Steuerflächenelements (61) und des oberen Steuerflächenelements (6S) zumindest annähernd gleich sind und dadurch, dass das untere und das obere Steuerflächenelement symmetrisch um die Drehachse (z-z) des Seitenruders ausgeschlagen werden.

5. Verfahren nach einem der Ansprüche 1 bis 4,
**dadurch gekennzeichnet, dass** der Ausschlag der Steuerflächenelemente (61, 6S) abhängig von der Überschreitung eines Schwellwerts (Po) durch einen für eine bestimmte Flugsituation des Flugzeugs repräsentativen Parameter (P) ist.

6. Verfahren nach Anspruch 5,
**dadurch gekennzeichnet, dass** der Parameter (P) die Geschwindigkeit des Flugzeugs ist.

7. Verfahren nach Anspruch 5,
**dadurch gekennzeichnet, dass** der Parameter (P) die Mach-Zahl ist.

8. Verfahren nach Anspruch 5,
**dadurch gekennzeichnet, dass** der Parameter (P) der dynamische Druck ist.

9. Flugzeug mit verbesserter Rollsteuerung, welches das unter einem der Ansprüche 2 bis 8 spezifizierte Verfahren ausführt, Folgendes umfassend:
- einen Rumpf (2),
- zwei bezüglich des Rumpfes (2) symmetrisch angeordnete Flügel (3G, 3D), die mit ansteuerbaren aerodynamischen Flächen (5G, 5D, 8G, 8D), die geeignet sind, an dem Flugzeug eine Rollbewegung zu erzeugen, ausgestattet sind,
- Mittel (11, 13, 19) zum Rollsteuern des Flugzeugs, die geeignet sind, die ansteuerbaren aerodynamischen Flächen zu steuern,
- ein vertikales Seitenleitwerk (4), das von dem hinteren Teil (2R) des Rumpfes (2) abragt und mit einem Seitenruder (6) ausgestattet ist, das sich entlang der Hinterkante (7) des Seitenleitwerks (4) erstreckt und gegenüber diesem um eine Drehachse (z-z) drehbar ist,
- Mittel (12, 13, 14) zur Giersteuerung des Flugzeugs, die geeignet sind, das Seitenruder (6) zu steuern,
- ein Seitenruder (6), das aus mindestens zwei Steuerflächenelementen (61, 6S) besteht, die entlang der Drehachse (z-z) hintereinander angeordnet sind,
**dadurch gekennzeichnet, dass**:
- die Mittel (12, 13, 14) zur Giersteuerung des Flugzeugs geeignet sind, erste Ausschlagbefehle für jedes der Steuerflächenelemente (6I, 6S) zu erzeugen,
- die Mittel zum Rollsteuern (11, 13, 19) geeignet sind, zusätzlich zu Ausschlagbefehlen für die aerodynamischen Flächen (5G, 5D, 8G, 8D), zweite individuelle Ausschlagbefehle für die Steuerflächenelemente (61, 6S) zu erzeugen, wobei die zweiten Ausschlagbefehle derart sind, dass die resultierende Gierwirkung zumindest annähernd Null ist und
- Additionsmittel (17, 18) vorgesehen sind, um für jedes der Steuerflächenelemente (61, 6S), den zweiten individuellen Ausschlagbefehl zu dem entsprechenden ersten individuellen Ausschlagbefehl zu addieren, wenn die Messung eines für eine bestimmte Flugsituation des Flugzeugs repräsentativen Parameters (P) einen vorgegebenen Schwellwert (Po) überschreitet.

10. Flugzeug nach Anspruch 9,
**dadurch gekennzeichnet, dass** das Seitenruder (6) aus einem unteren Steuerflächenelement (6I) und einem oberen Steuerflächenelement (6S) besteht.
